# EUROPÄISCHE PATENTSCHRIFT

(11) **EP 3 176 030 B1**
(45) Veröffentlichungstag und Bekanntmachung des Hinweises auf die Patenterteilung: **23.01.2019**
(21) Anmeldenummer: 16002543.3
(22) Anmeldetag: 30.11.2016
(51) Int. Cl.: B60N 2/70, B60N 2/68

(54) **VERFAHREN ZUR HERSTELLUNG EINES FAHRZEUGSITZES**
METHOD FOR PRODUCING A VEHICLE SEAT
PROCÉDÉ DE FABRICATION D'UN SIÈGE DE VÉHICULE

(30) Priorität: 01.12.2015 DE 102015015761
(43) Veröffentlichungstag der Anmeldung: 07.06.2017
(73) Patentinhaber: SCHERDEL Marienberg GmbH, 09496 Marienberg (DE)
(72) Erfinder: Seitenglanz, Jan, 09429 Wolkenstein (DE); Fritzsch, Tino, 09496 Marienberg (DE); Ulbricht, Enrico, 09430 Drebach (DE)
(74) Vertreter: Patentanwälte Findeisen & Neumann

(56) Entgegenhaltungen:
- WO-A1-2011/112462
- DE-A1-102008 038 266
- DE-A1-102012 200 441
- DE-U1-202008 016 512

## Beschreibung

Die Erfindung betrifft ein Verfahren zur Herstellung eines Fahrzeugsitzes, der einen Hartschaumkörper mit nach mindestens einer Seitenfläche hin offenen Kanalkonturen aufweist, in denen ein separater Drahtrahmen eingesetzt und mit mehreren im Bereich der Kanalkonturen ausgestalteten Vorsprüngen und/oder Hinterschneidungen kraft- und/oder formschlüssig lagefixiert wird.

Moderne Fahrzeugsitze müssen umfangreichen Ansprüchen genügen. Dabei sind neben Komfortaspekten auch Sicherheitsaspekte wesentlich, um für die Fahrzeuginsassen in jeder Fahrsituation eine lagefixierte Abstützung im Sitz zu gewährleisten. Dies hat zur Entwicklung einer kaum überschaubaren Vielfalt von Fahrzeugsitzen geführt, mit denen unterschiedliche Lösungsansätze realisiert werden. So gibt es zum Beispiel Ausführungen mit kompakten Sitzschalen aus Blech bzw. Kunststoff mit aufliegendem Polster oder mit Draht-Kunststoff-Hybridteilen als Tragstruktur für Polsterelemente oder auch Konstruktionen, bei denen als Abstützung für das eigentliche Sitzpolster Hartschaumkomponenten verwendet werden. Um bei der letztgenannten Variante für die überwiegend aus expandiertem Polypropylen-Partikelschaum (EPP-Schaum) bestehenden Hartschaumteile eine ausreichende Stabilität und Lagefixierung zu gewährleisten, können den Hartschaumteilen Bauteile aus Metall oder Kunststoff zugeordnet werden.

Ein solcher Fahrzeugsitz wird beispielsweise in DE 10 2005 020 335 A1 beschrieben. Dabei besteht das Polsterteil aus einem EPP-Hartschaumteil mit einer Weichschaumauflage als Sitzfläche. Das Hartschaumteil weist an der Unterseite eine zum Fahrzeugboden kongruente Kontur auf, so dass eine direkte und formschlüssige Abstützung der gesamten Baugruppe auf dem Fahrzeugboden möglich ist.

Aus EP 1 106 424 A2 sind ein Fahrzeugsitz und ein Verfahren zum Herstellen desselben bekannt, bei dem Drahtklammern in einen Hartschaumkörper derart eingebettet sind, dass ein Abschnitt der Drahtklammern aus dem Hartschaum hervorragt und zur Befestigung einer beispielsweise aus Weichschaum bestehenden Sitzauflage verwendet werden kann.

DE 10 2008 046 473 B4 betrifft ein Verfahren zur Herstellung eines Sitzelementes, das einen Drahtrahmen und eine Polsterauflage aufweist. Der Drahtrahmen wird in ein Formwerkzeug eingelegt und mit EPP-Schaum umschäumt. Anschließend wird diese komplette Baugruppe nochmals mit elastischem Schaumstoff zur Ausbildung einer Polsterauflage umschäumt.

Die oben benannten technischen Lösungen bewirken eine dauerhaft feste Verbindung des Hartschaumkörpers mit den eingelagerten Rahmen- oder sonstigen Bauteilen. Hierfür ist allerdings ein zeit- und kostenaufwendiger (Toleranzen, Abdichtung, Rahmenfixierung in der Schäumform usw.) Fertigungsprozess notwendig und es kann sich ein Bauteilverzug beim Abkühlen ergeben. Außerdem ergeben sich dadurch längere Wertschöpfungs- und Transportkosten.

Diese Probleme können vermieden werden, sofern der Hartschaumkörper als eine separate Baugruppe mit Aufnahmekanälen hergestellt wird, in die ein ebenfalls separater Draht- oder Rohrrahmen eingesetzt und fixiert wird. Hierbei ist grundsätzlich eine stoffschlüssige Lagefixierung (z.B. mit Schmelzkleber) des Rahmens im Hartschaumkörper möglich. Ein solcher Materialverbund würde jedoch ebenfalls die oben erläuterten Nachteile bezüglich Fertigungskosten, Verzug und dergleichen aufweisen. Deshalb werden überwiegend Verfahren angewendet, bei denen in den Aufnahmekanälen des Hartschaumkörpers Vorsprünge, Hinterschneidungen oder andere funktionsgleiche Konturen ausgestaltet sind, in denen Abschnitte des als komplette Baugruppe eingesetzten Draht- oder Rohrrahmen einschnappen und weitgehend dauerhaft fixiert sind.

Aus DE 10 2012 200 441 A1 ist ein Fahrzeugsitz mit einem Sitzrahmen aus Hartschaum und mehreren Drahtbügeln für eine Befestigung des Sitzes am Fahrzeugboden bekannt. Hierbei sind im Hartschaumkörper Kanalstrukturen ausgeformt, in denen jeweils Konturabschnitte der Drahtbügel geführt werden. Die Drahtbügel weisen außerdem Vorsprünge auf, die durch kongruente Aussparungen des Hartschaumkörpers geführt werden und die Lagefixierung am Fahrzeugboden bewirken.

In DE 10 2008 038 266 A1 wird ein Fahrzeugsitz mit einem Rohrrahmen als Polsterträger für ein Sitzkissen beschrieben, auf dem zumindest abschnittsweise ein Hartschaumelement zur Ausbildung spezifischer Konturen in der Sitzfläche abgestützt ist. Der Rohrrahmen umfasst mehrere in Fahrtrichtung sowie rechtwinklig zur Fahrtrichtung angeordnete Rohrsegmente, auf denen Abschnitte des Hartschaumelementes vollständig oder zumindest teilweise abgestützt werden. Hierfür sind in der Grundfläche vom Hartschaumelement Kanalstrukturen ausgeformt, deren Kontur kongruent ist zur Kontur der jeweils zugeordneten Rohrsegmente. An mindestens einem der rechtwinklig zur Fahrtrichtung angeordneten Rohrsegmente ist außerdem eine Halterung für das Hartschaumelement gelagert. Mit dieser Halterung soll auch in kritischen Fahrzuständen eine lagefixierte Verbindung des Rohrrahmens mit dem Hartschaumelement gewährleistet werden.

Ein ähnlicher Lösungsansatz ist Gegenstand von DE 20 2008 016 512 U1. Allerdings sind hier der als Rohrrahmen ausgestaltete Polsterträger und das zugeordnete Hartschaumteil nicht einstückig ausgeführt. Diese Baugruppen bestehen jeweils aus mehreren Segmenten, die modulartig durch kraft- und/oder formschlüssige Verbindung zusammengefügt werden. Somit ergeben sich Vorteile bezüglich der Montage und Modifizierbarkeit für unterschiedliche Fahrzeugmodelle.

Das Prinzip derartiger Fahrzeugsitze mit einem Hartschaumkörper und einem separaten Draht- oder Rohrrahmen, der in offene Kanäle des Hartschaumkörpers eingesetzt und darin lagefixiert wird, hat sich grundsätzlich bewährt. Dennoch besteht weiter Entwicklungsbedarf. Denn oftmals sind zusätzliche Befestigungselemente notwendig, um den Hartschaumkörper auf Metallteilen der Trägerbaugruppen zu befestigen. Dies erhöht wiederum den Aufwand der Baugruppenmontage. Weiterhin ist ein Toleranzausgleich der einzelnen Baugruppen zueinander notwendig, der durch unterschiedliche Elastizitäten dieser Baugruppen zusätzlich erschwert wird.

Aufgabe der vorliegenden Erfindung ist es, ein Verfahren zur Herstellung und Montage eines Fahrzeugsitzes mit einem in Kanalkonturen eines Hartschaumkörpers angeordneten Drahtrahmen zu schaffen, mit dem - bezogen auf den Drahtquerschnitt - größere Überdeckungen und stabilere Fixierungen als bisher erreicht werden können. Dabei soll insbesondere ein festerer Verbund von Schaum und Draht erreicht werden, als dies bisher möglich ist. An dieser Stelle wird ausdrücklich darauf hingewiesen, dass unter dem Begriff "Draht" nachfolgend nicht nur Drähte mit einem an sich relativ geringen Querschnitt verstanden werden, sondern auch "Rohre", die einen größeren Querschnitt als Drähte und einen innenliegenden Hohlraum sowie auch andere als runde Querschnittskonturen aufweisen.

Die Aufgabe wird mit den Merkmalen gemäß Patentanspruch 1 gelöst. Demzufolge wird zunächst ein erster Draht in eine erste Kanalkontur eines Hartschaumkörpers eingelegt. Danach wird ein zweiter Draht in eine, die erste Kanalkontur in einem Winkel schneidende zweite Kanalkontur derart eingelegt, dass der erste Draht und der zweite Draht im Bereich der sich schneidenden ersten und zweiten Kanalkontur in direktem Kontakt aufeinander liegen. Nachfolgend werden weitere Drähte in weiteren sich jeweils schneidenden Kanalkonturen des Hartschaumkörpers derart eingelegt, dass jeder Draht zumindest in einem Bereich von zwei sich schneidenden Kanalkonturen in direktem Kontakt auf zumindest einem anderen Draht aufliegt. Abschließend werden an mindestens einigen der sich durch jeweils zwei aufeinander liegende Drähte ergebenden Schnittstellen diese jeweils zwei Drähte durch Schweißen miteinander verbunden, vorzugsweise mittels Punktschweißen. Dabei weisen die Schnittstellen eine Aussparung als freien Bauraum auf, der zum Handling der Schweißtechnik benötigt wird. Durch Ausgestaltungen in diesem Bereich kann während des Verschweißens der Drähte auch das umgebende Hartschaummaterial etwas aufgeschmolzen werden. Dies führt zu einem kleinen Materialstrom, der nach dem Abkühlen teilweise auch die Drähte umschließt und somit eine noch bessere Verbindung bewirkt. Vorteilhafte Ausgestaltungen sind Gegenstand von abhängigen Ansprüchen, deren Merkmale in einem Ausführungsbeispiel näher beschrieben werden.

Der grundlegende Lösungsansatz des erfindungsgemäßen Verfahrens besteht darin, dass der Drahtrahmen nicht wie bisher üblich als eine vorgefertigte Baugruppe in Hartschaum eingeschäumt oder in einen ebenfalls vorgefertigten Hartschaumkörper eingelegt und unter Verwendung von Vorsprüngen und anderen funktionsgleichen Elementen lagefixiert wird, sondern dass zunächst mehrere separate Drahtsegmente in Kanalkonturen des Hartschaumkörpers eingelegt werden, die erst nach ihrer endgültigen Positionierung im Hartschaumkörper zu einem Drahtrahmen verschweißt werden, der in allen Freiheitsgraden exakt lagefixiert ist und den Hartschaumkörper bzw. die Hartschaumkörpersegmente im Drahtrahmen fixiert. Die Kanalkonturen des Hartschaumkörpers werden somit zur Lagefixierung für das Verschweißen der Drähte und für die Lagefixierung der gesamten Schweißbaugruppe im Hartschaumkörper und/oder umgekehrt benutzt.

Durch Anwendung dieses Verfahrens kann der Hartschaumkörper auf einem größeren Umfangsabschnitt der Drähte des Drahtrahmens und in tieferen Hinterschneidungen im Hartschaumkörper fixiert werden, so dass eine wesentlich bessere Überdeckung als bisher durch die am Hartschaumkörper ausgestalteten Vorsprünge erreicht wird.

Nachfolgend wird ein Ausführungsbeispiel anhand der Zeichnung erläutert. Es zeigen:
- Fig. 1: einen für das vorgeschlagene Verfahren geeigneten Hartschaumkörperabschnitt in perspektivischer Ansicht
- Fig. 2: den Hartschaumkörperabschnitt gemäß Fig. 1 aus anderem Betrachtungswinkel mit zwei eingelegten Drähten
- Fig. 3: das aus Fig. 1 und Fig. 2 ersichtliche Prinzip mit zwei Hartschaumkörperabschnitten
- Fig. 4: den Grundaufbau eines stilisiert dargestellten Abschnittes eines mit dem Verfahren hergestellten Verbundes von Draht und Hartschaum
- Fig. 5: eine Modifizierung des Hartschaumkörpers mit Kanalkonturen auf zwei sich gegenüberliegenden Seitenflächen
- Fig. 6: einen Ausschnitt aus einer Kontur des Fahrzeugsitzes mit Blickrichtung von oben
- Fig. 7: einen Ausschnitt aus der Kontur gemäß Fig. 6 mit Blickrichtung von unten

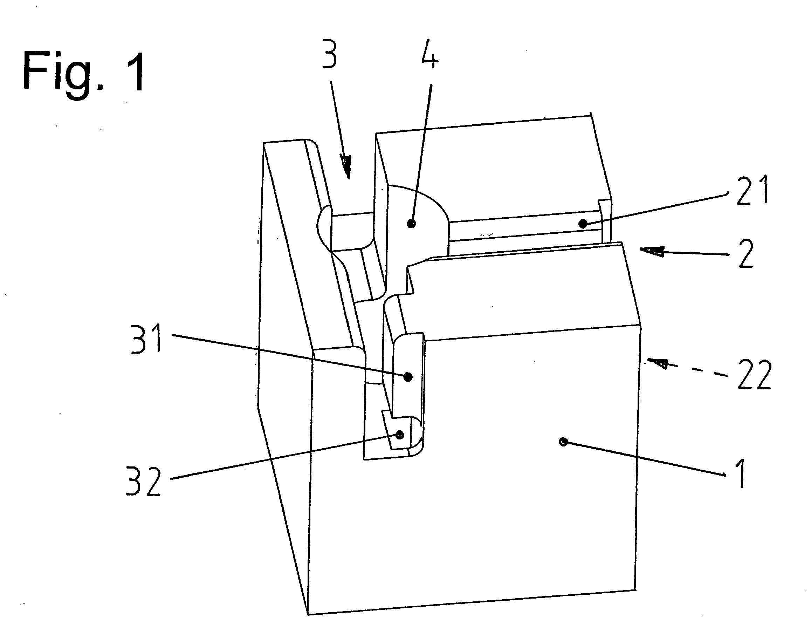

Das erfindungsgemäße Verfahren ist zur Herstellung eines Fahrzeugsitzes geeignet, der einen Hartschaumkörper mit nach mindestens einer Seitenfläche hin offenen Kanalkonturen aufweist. Ein hierfür geeigneter Hartschaumkörper 1 ist beispielhaft in **Fig. 1** dargestellt.

Im Hartschaumkörper 1 sind zwei Kanalkonturen 2 und 3 ausgestaltet, die im gezeigten Beispiel in einem Winkel von 90° zueinander verlaufen. Im Schnittbereich der beiden Kanalkonturen 2 und 3 ist eine etwas größere, hier kreisähnliche Aussparung 4 ausgestaltet, die für das spätere Verschweißen der in Fig. 1 nicht näher gezeigten Drähte benötigt wird. Der Boden der Kanalkontur 2 verläuft tiefer als der Boden der Kanalkontur 3. Vorzugsweise entspricht der Höhenunterschied zwischen den Kanalkonturen 2 und 3 zwei Drittel vom Durchmesser der später einzulegenden Drähte (entspricht Drahtdurchmesser minus Einsinktiefe beim Schweißen). Der Kanalkontur 2 ist weiterhin ein Vorsprung 21 zugeordnet, der eine Hinterschneidung 22 ausbildet. Der Kanalkontur 3 ist ebenfalls ein Vorsprung 31 zugeordnet, der hier eine Hinterschneidung 32 ausbildet. Der später aus den Drähten zu bildende Drahtrahmen wird nach Fertigstellung in seiner Funktionslage durch die im Bereich der Kanalkonturen 2 und 3 ausgestalteten Vorsprünge 21 und 31 bzw. Hinterschneidungen 22 und 32 und die Anlage an den Kanalseitenwänden formschlüssig lagefixiert. Sofern diese Hinterschneidungen 22 und 32 kompakt ausgeführt sind, wird zusätzlich eine kraftschlüssige Lagefixierung erreicht.

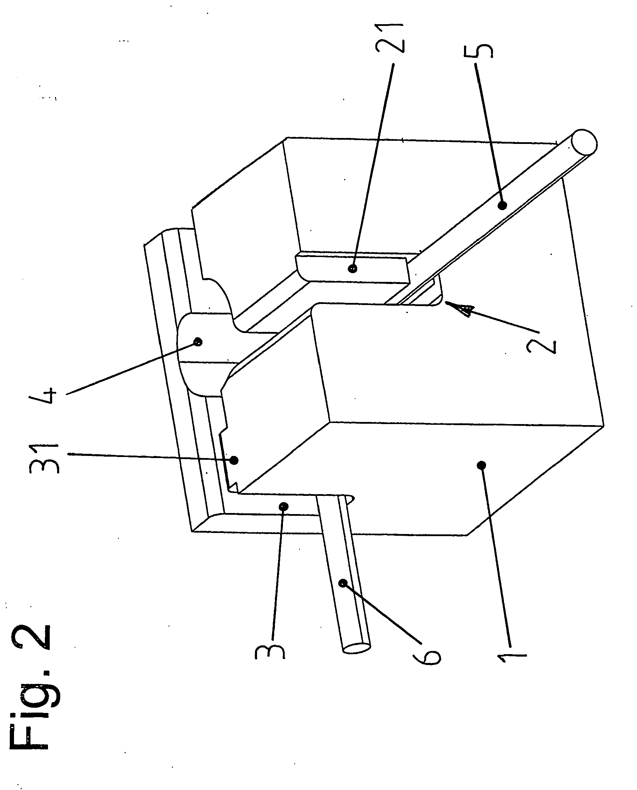

Aus **Fig. 2** ist ersichtlich, dass zunächst ein erster Draht 5 in die erste Kanalkontur 2 des Hartschaumkörpers 1 eingelegt wird. Dieser Draht 5 wird, nachdem er auf dem Boden der Kanalkontur 2 aufliegt, rechtwinklig zu seiner Einführrichtung soweit in die unter dem Vorsprung 21 ausgestaltete Hinterschneidung 22 der Kanalkontur 2 verlagert, dass er nach dem Verschweißen mit einem später in der sich schneidenden Kanalkontur 3 auf diesen ersten Draht 5 aufgelegten weiteren Draht nicht mehr aus dem Bereich der Hinterschneidung 22 verlagerbar ist. Vor dem Verschweißen dient die Hinterschneidung 22 als Fixierung für den Schweißprozess.

Danach wird ein zweiter Draht 6 in die zweite Kanalkontur 3 eingelegt, welche die erste Kanalkontur 2 in einem definierten Winkel (hier, wie bereits benannt 90°) schneidet. Dabei wird der Draht 6 so in die Kanalkontur 3 eingelegt, dass beide Drähte 5 und 6 im Bereich des freien Bauraums 4 der Kanalkonturen 2 und 3 in direktem Kontakt aufeinander liegen. Danach wird der Draht 6 rechtwinklig zu seiner Einführrichtung soweit in die unter dem Vorsprung 31 ausgestaltete Hinterschneidung 32 der Kanalkontur 3 verlagert, dass er nach dem Verschweißen mit dem Draht 5 nicht mehr aus dem Bereich der Hinterschneidung 32 verlagerbar ist. Vor dem Verschweißen dient die Hinterschneidung 32 als Fixierung für den Schweißprozess.

Danach können weitere Drähte in weiteren sich jeweils schneidenden Kanalkonturen des Hartschaumkörpers 1 derart eingelegt werden, dass jeder Draht zumindest in einem Bereich von zwei sich schneidenden Kanalkonturen in direktem Kontakt auf zumindest einem anderen Draht aufliegt. Eine derartige Ausführung ist in der Zeichnung allerdings nicht näher dargestellt, die Zeichnung zeigt lediglich einen Hartschaumkörper 1 mit zwei Kanalkonturen 2 und 3 für zwei Drähte 5 und 6.

Für die Funktionsfähigkeit ist es an sich ausreichend, wenn nur ein Draht 5 oder 6 in der oben beschriebenen Art und Weise unter einem Vorsprung 21 oder 31 in die jeweilige Hinterschneidung 22 oder 32 verlagert wird. Die beschriebene Verlagerung von beiden Drähten 5 und 6 ergibt jedoch eine besonders hohe und somit vorteilhafte Lagefixierung des sich später nach dem Verschweißen ausbildenden Drahtrahmens.

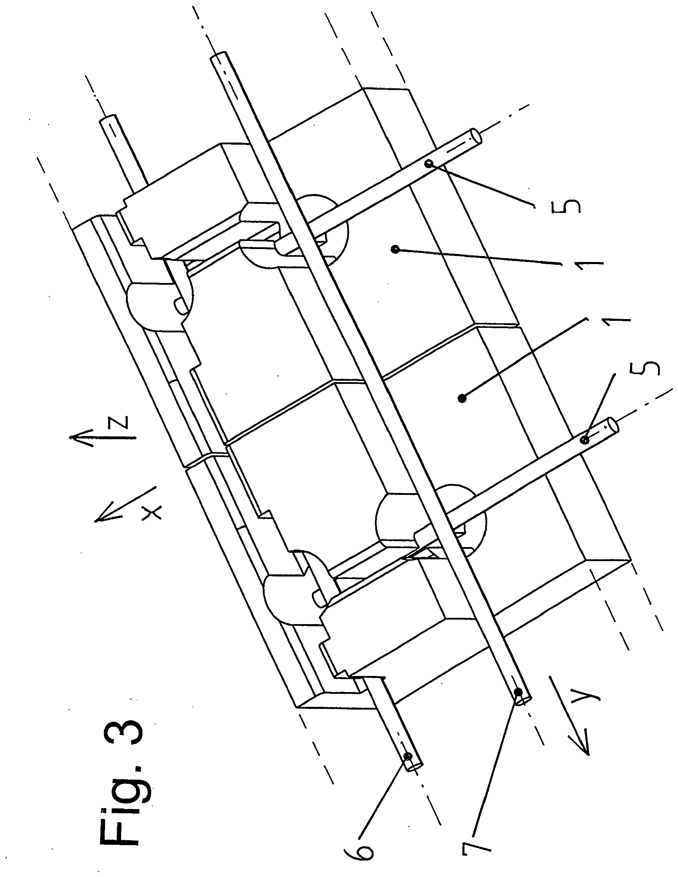

**Fig. 3** zeigt, dass der Hartschaumkörper 1 auch aus mehreren Segmenten zusammengefügt werden kann. Dadurch ergeben sich Vorteile bezüglich Transport, Handhabung, Ausgleich von Toleranzen und Reduzierung des Verzugs. Außerdem ist aus Fig. 3 ersichtlich, dass weitere Drähte 7 nicht nur innerhalb von Kanalkonturen 2 und 3 geführt werden, sondern auch außerhalb der Hartschaumkörper 1. Diese Drähte 7 können in diesem Bereich auch mit Abschnitten der Drähte 5 verschweißt werden, so dass weitere Segmente zur Lagefixierung und Kraftaufnahme eines sich ausbildenden Drahtrahmens entstehen. Dabei zeigt Fig. 3 die seitliche Lagefixierung des verschweißten Drahtrahmens in X- und Y- Richtung sowie die zusätzliche Lagefixierung durch die Hinterschneidungen in Z-Richtung. Unabhängig von der konkreten Anzahl von Hartschaumkörpern, Kanalkonturen und Drähten werden dann an mindestens einigen der sich durch jeweils zwei aufeinander liegende Drähte ergebenden Schnittstellen die jeweils zwei Drähte durch Schweißen miteinander verbunden.

In Abhängigkeit der konkreten Einsatzbedingungen des zu fertigenden Fahrzeugsitzes werden derart viele Drähte in sich einander schneidenden Kanalkonturen von derart vielen Hartschaumkörpern angeordnet und miteinander verschweißt, dass ein funktionell optimaler aus Längs- und Querdrähten bestehender Drahtrahmen erzeugt wird, der in der Gesamtheit von Hartschaumkörpern dauerhaft lagefixiert angeordnet ist.

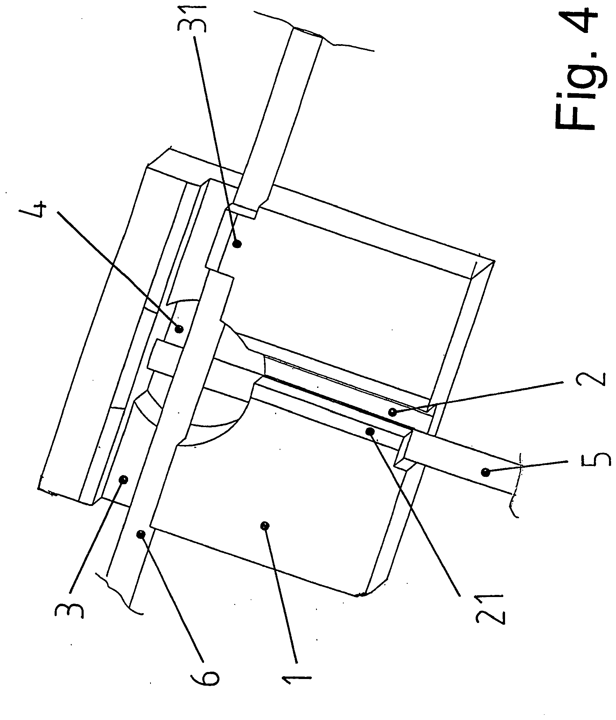

**Fig. 4** zeigt nochmals stilisiert den Grundaufbau eines Verbundabschnittes von Draht und Hartschaum, der mit einem erfindungsgemäßen Verfahren hergestellt worden ist. Aus der Abbildung sind insbesondere ein Hartschaumkörper 1 mit zwei Kanalkonturen 2 und 3 sowie zwei Vorsprüngen 21 und 31, zwei in den Kanalkonturen 2 und 3 eingelegte Drähten 5 und 6 sowie ein freier Bauraum 4 im Schnittbereich der Kanalkonturen 2 und 3 zum Handhaben der Gerätetechnik für das Verschweißen der Drähte 5 und 6 ersichtlich.

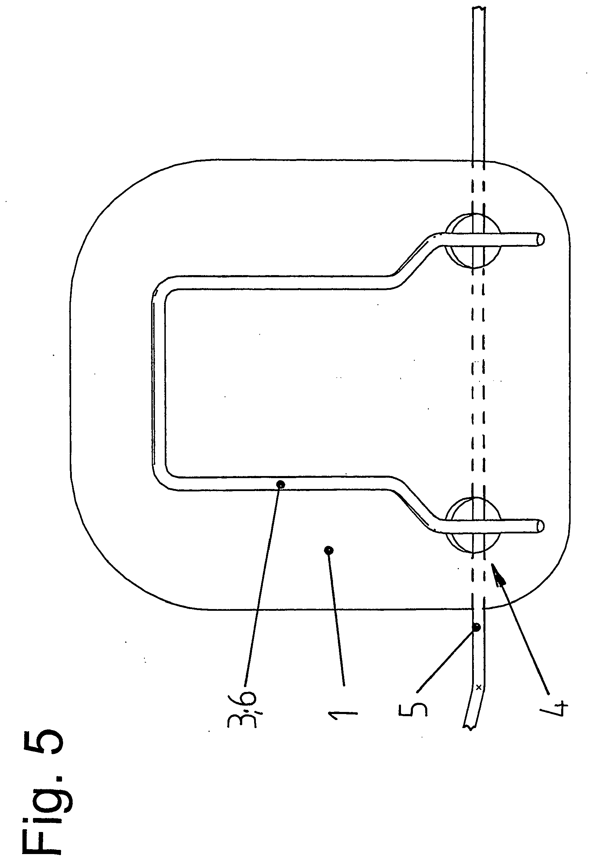

Die erfindungsgemäße technische Lösung kann weiter ausgestaltet werden. So ist es möglich, dass der Hartschaumkörper 1 nicht auf lediglich einer Seitenfläche, sondern auf zwei sich gegenüberliegenden Seitenflächen jeweils mindestens eine offene Kanalkontur 2 bzw. 3 aufweist, in die jeweils ein Draht 5 oder 6 eingelegt wird. Auch diese Drähte 5 und 6 liegen in Funktionslage an mindestens einer Stelle aufeinander und werden hier miteinander verschweißt. Ein Ausschnitt einer derartigen Ausführung, bei welcher der Hartschaumkörper 1 gewissermaßen zwischen den Drähten 5 und 6 eingeklemmt wird, ist aus **Fig. 5** ersichtlich.

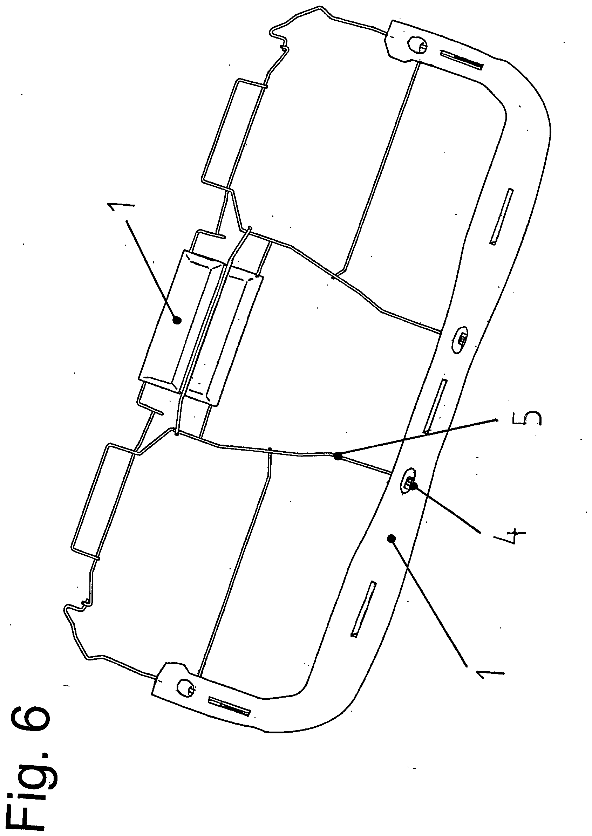

**Fig. 6** zeigt einen Ausschnitt aus einer Kontur für einen Fahrzeugsitz mit Blickrichtung von oben. Hierbei ist ersichtlich dass Hartschaumkörper 1 und Drähte 5 bzw. 6 zumindest abschnittsweise anstelle des Verschweißens auch mit anderen Varianten miteinander verbunden werden können, beispielsweise mittels Klemmverbindung

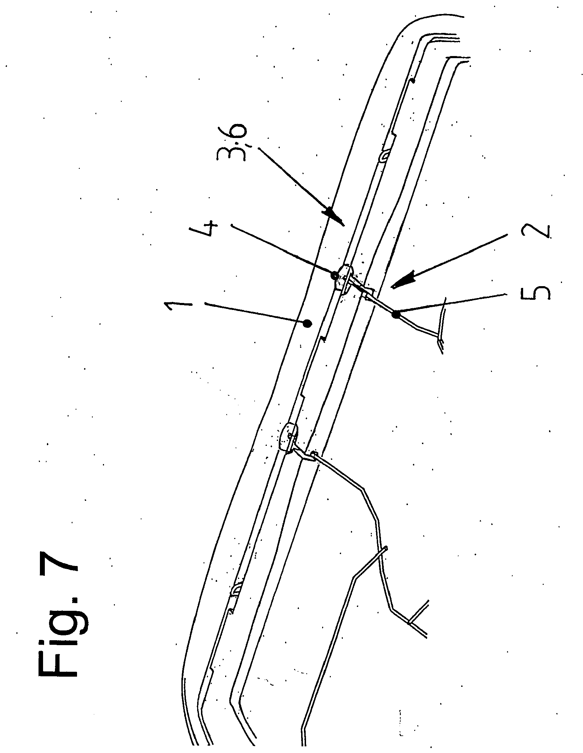

**Fig. 7** zeigt schließlich einen Ausschnitt aus der Kontur gemäß Fig. 6, hier mit Blickrichtung von unten. Aus der Abbildung ist nochmals die räumliche Zuordnung von Hartschaumkörper 1, Kanalkonturen 2 und 3 sowie den Drähten 5 und 6 ersichtlich.

### Bezugszeichenliste

- 1: Hartschaumkörper
- 2: Kanalkontur
- 21: Vorsprung
- 22: Hinterschneidung
- 3: Kanalkontur
- 31: Vorsprung
- 32: Hinterschneidung
- 4: freier Bauraum / Aussparung im Schnittbereich der Kanalkonturen
- 5: Draht
- 6: Draht
- 7: Draht

## Patentansprüche

1. Verfahren zur Herstellung eines Fahrzeugsitzes, der einen Hartschaumkörper (1) mit nach mindestens einer Seitenfläche hin offenen Kanalkonturen (2, 3) aufweist, in denen ein separater Drahtrahmen eingesetzt und mit mehreren im Bereich der Kanalkonturen (2, 3) ausgestalteten Vorsprüngen (21, 31) und/oder Hinterschneidungen (22, 32) kraft- und/oder formschlüssig lagefixiert wird, **dadurch gekennzeichnet,**
**dass** zunächst ein erster Draht (5) in eine erste Kanalkontur (2) des Hartschaumkörpers (1) eingelegt wird, dass danach ein zweiter Draht (6) in eine, die erste Kanalkontur (2) in einem Winkel schneidende zweite Kanalkontur (3) derart eingelegt wird, dass der erste Draht (5) und der zweite Draht (6) im Bereich der sich schneidenden ersten (2) und zweiten Kanalkontur (3) in direktem Kontakt aufeinander liegen, dass nachfolgend weitere Drähte (7) in weiteren sich jeweils schneidenden Kanalkonturen des Hartschaumkörpers (1) derart eingelegt werden, dass jeder Draht zumindest in einem Bereich von zwei sich schneidenden Kanalkonturen in direktem Kontakt auf zumindest einem anderen Draht aufliegt und dass abschließend an mindestens einigen der sich durch jeweils zwei aufeinander liegende Drähte ergebenden Schnittstellen diese jeweils zwei Drähte durch Schweißen miteinander verbunden werden.

2. Verfahren nach Anspruch 1, **dadurch gekennzeichnet,**
**dass** mindestens ein erster Draht (5) zunächst in eine Kanalkontur (2) eingelegt wird und, nachdem er auf dem Boden dieser Kanalkontur (2) aufliegt, rechtwinklig zu seiner Einführrichtung soweit in eine Hinterschneidung (22) der Kanalkontur (2) verlagert wird, dass er nach dem Verschweißen mit einem später in einer sich schneidenden Kanalkontur (3) auf diesen ersten Draht (5) aufgelegten weiteren Draht (6) nicht mehr aus dem Bereich der Hinterschneidung (22) verlagerbar ist.

3. Verfahren nach Anspruch 1, **dadurch gekennzeichnet,**
**dass** mindestens ein erster Draht (5) zunächst in eine Kanalkontur (2) eingelegt wird und ein weiterer Draht (6) in einer sich schneidenden Kanalkontur (3), nachdem er auf dem ersten Draht (5) aufliegt, rechtwinklig zu seiner Einführrichtung soweit in eine Hinterschneidung (32) der sich schneidenden Kanalkontur (3) verlagert wird, dass er nach dem Verschweißen mit dem ersten Draht (5) nicht mehr aus dem Bereich der Hinterschneidung (32) verlagerbar ist.

4. Verfahren nach Anspruch 1, **dadurch gekennzeichnet,**
**dass** ein erster Draht (5) in eine Kanalkontur (2) eingelegt wird und, nachdem er auf dem Boden dieser Kanalkontur (2) aufliegt, rechtwinklig zu seiner Einführrichtung soweit in eine Hinterschneidung (22) der Kanalkontur (2) verlagert wird, dass er nach dem Verschweißen mit einem später in einer sich schneidenden Kanalkontur (3) auf den ersten Draht (5) aufgelegten weiteren Draht (6) nicht mehr aus dem Bereich der Hinterschneidung (22) verlagerbar ist und dass der weitere Draht (6), nachdem er auf dem ersten Draht (5) aufliegt, ebenfalls rechtwinklig zu seiner Einführrichtung soweit in eine Hinterschneidung (32) der sich schneidenden Kanalkontur (3) verlagert wird, dass auch er nach dem Verschweißen mit dem ersten Draht (5) nicht mehr aus dem Bereich der Hinterschneidung (32) verlagerbar ist.

5. Verfahren nach Anspruch 1, **dadurch gekennzeichnet,**
**dass** die Drähte (5, 6, 7) in sich jeweils in einem Winkel von annähernd 90° schneidende Kanalkonturen (2, 3) eingelegt werden.

6. Verfahren nach Anspruch 1, **dadurch gekennzeichnet,**
**dass** derart viele Drähte (5, 6, 7) in sich einander schneidenden Kanalkonturen (2, 3) angeordnet und miteinander verschweißt werden, dass funktionell ein aus Längs- und Querdrähten bestehender Drahtrahmen erzeugt wird.

7. Verfahren nach Anspruch 1, **dadurch gekennzeichnet,**
**dass** die Drähte (5, 6, 7) in Kanalkonturen (2, 3) verschiedener Hartschaumkörper (1) eingelegt werden.

8. Verfahren nach Anspruch 7, **dadurch gekennzeichnet,**
**dass** derart viele Drähte (5, 6, 7) in derart vielen Hartschaumkörpern (1) angeordnet und miteinander verschweißt werden, dass funktionell ein aus Längs- und Querdrähten bestehender Drahtrahmen mit mehreren Hartschaumsegmenten (1) erzeugt wird.

9. Verfahren nach Anspruch 1, **dadurch gekennzeichnet,**
**dass** zusätzlich zu den im Bereich von sich schneidenden Kanalkonturen (2, 3) verschweißten Drähten (5, 6, 7) auch zumindest teilweise an Außenflächen außerhalb des Hartschaumkörpers (1) verlaufende und sich schneidende Drähte miteinander verschweißt werden.

10. Verfahren nach Anspruch 1, **dadurch gekennzeichnet,**
**dass** der Hartschaumkörper (1) auf zwei sich gegenüberliegenden Seitenflächen jeweils mindestens eine offene Kanalkontur aufweist, in die jeweils ein Draht eingelegt wird, wobei diese Drähte in Funktionslage an mindestens einer Stelle aufeinander liegen und an dieser Stelle miteinander verschweißt werden.

11. Verfahren nach Anspruch 1, **dadurch gekennzeichnet,**
**dass** während des Schweißvorganges an den Drahtkreuzungsstellen zumindest teilweise unter gezielter Ausnutzung des Wärmeeintrages beim Schweißvorgang die an die Schweißstelle angrenzenden Bereiche des Hartschaumkörpers (1) aufgeschmolzen werden.

## Claims

1. A method for producing a vehicle seat which comprises a rigid foam body (1) having conduit contours (2, 3) which are at least open towards one side surface in which a separate wire frame is inserted and positionally fixed in a friction and/or positive locking manner by means of multiple projections (21, 31) and/or undercuts (22, 32) in the region of the conduit contours (2, 3), **characterized in**
**that** initially a first wire (5) is inserted in a first conduit contour (2) of the rigid foam body (1), that then a second wire (6) is inserted in a second conduit contour (3), which intersects at an angle with the first conduit contour (2), such that the first wire (5) and the second wire (6) rest on one another in direct contact in the region of the intersecting first (2) and second (3) conduit contours, that subsequently other wires (7) are inserted in other intersecting conduit contours of the rigid foam body (1), such that each wire rests on at least one other wire in direct contact at least in the region of two intersecting conduit contours and that finally any two such wires resting on top of one another are connected by welding at least at some of the interfaces resulting from two wires resting on top of one another.

2. The method according to claim 1, **characterized in**
**that** at least one first wire (5) is initially inserted in a conduit contour (2) and, after it rests on the bottom of this conduit contour (2), is moved at a right angle to its insertion direction far enough into an undercut (22) of the conduit contour (2) that, after being welded together with another wire (6) later inserted in an intersecting conduit contour (3) on top of this first wire (5), it can no longer be moved out of the region of the undercut (22).

3. The method according to claim 1, **characterized in**
**that** at least one first wire (5) is initially inserted in a conduit contour (2), and another wire (6) in an intersecting conduit contour (3), after resting on the first wire (5), is moved at a right angle to its insertion direction far enough into an undercut (32) of the intersecting conduit contour (3) that after being welded together with the first wire (5) it can no longer be moved out of the region of the undercut (32).

4. The method according to claim 1, **characterized in**
**that** a first wire (5) is inserted in a conduit contour (2) and, after it rests on the bottom of this conduit contour (2), is moved at a right angle to its insertion direction far enough into an undercut (22) of the conduit contour (2) that, after being welded together with another wire (6) later inserted in an intersecting conduit contour (3) on top of this first wire (5), it can no longer be moved out of the region of the undercut (22), and that the other wire (6), after resting on the first wire (5), is moved , also at a right angle to its insertion direction, far enough into an undercut (32) of the intersecting conduit contour (3) that after being welded together with the first wire (5) it can no longer be moved out of the region of the undercut (32).

5. The method according to claim 1, **characterized in**
**that** the wires (5, 6, 7) are each inserted in conduit contours (2, 3) intersecting at an angle of approximately 90°.

6. The method according to claim 1, **characterized in**
**that** so many wires (5, 6, 7) are disposed and welded together in intersecting conduit contours (2, 3) that functionally a wire frame consisting of longitudinal and transverse wires is created.

7. The method according to claim 1, **characterized in**
**that** the wires (5, 6, 7) are inserted in conduit contours (2, 3) of different rigid foam bodies (1).

8. The method according to claim 7, **characterized in**
**that** so many wires (5, 6, 7) are disposed and welded together in so many rigid foam bodies (1) that functionally a wire frame consisting of longitudinal and transverse wires with multiple rigid foam segments is created.

9. The method according to claim 1, **characterized in**
**that**, in addition to the wires (5, 6, 7) welded together in intersecting conduit contours (2, 3), wires extending and intersecting on the outer surfaces of the rigid foam body (1) are also at least partially welded together.

10. The method according to claim 1, **characterized in**
**that** the rigid foam body (1) on two opposite lateral surfaces comprises at least one open conduit contour into which a respective wire is inserted, wherein these wires rest on top on one another in functional position at at least one site and are welded together at this site.

11. The method according to claim 1, **characterized in**
**that**, during the welding operation at the sites of intersecting wires, the regions of the rigid foam body (1) adjacent to the welding site are melted through at least partially utilizing the heat input during the welding operation.

## Revendications

1. Procédé de fabrication d'un siège de véhicule qui comprend un élément de mousse rigide (1) avec des canaux intégrés dont les contours (2, 3) sont ouverts vers au moins une surface latérale et dans lesquels sera inséré un cadre de fil métallique séparé qui, avec plusieurs saillies (21, 31) disposées au niveau des bords des canaux (2, 3) et/ou avec des contre-dépouilles (22, 32), sera fixé en position par force et/ou de façon solidaire, **caractérisé en ce**
**que** d'abord un premier fil métallique (5) est inséré dans un premier contour des canaux (2) de l'élément de mousse rigide (1), après quoi un deuxième fil métallique (6) est inséré dans un deuxième contour des canaux (3), ce dernier se croisant avec le premier contour des canaux (2) à un angle, que ladite insertion est effectuée de sorte que le premier fil métallique (5) et le deuxième fil métallique (6) reposent, au niveau de l'intersection du premier contour (2) et du deuxième contour des canaux (3), l'un sur l'autre et en contact direct, qu'ensuite sont insérés d'autres fils métalliques (7) dans d'autres intersections de contours des canaux de l'élément de mousse rigide (1), ceci de telle sorte que chaque fil métallique repose, au niveau d'au moins une intersection de deux contours des canaux, en contact direct et sur au moins un autre fil métallique, et que finalement les deux fils métalliques reposés l'un sur l'autre sont raccordés, au niveau d'au moins certaines intersections formées par lesdits fils métalliques, par soudage.

2. Revendication suivant la revendication 1, **caractérisé en ce**
**que** d'abord au moins un premier fil métallique (5) est inséré dans un contour des canaux (2) et que, après qu'il repose sur le fond de ce contour des canaux (2), ledit fil métallique est déplacé, à l'angle droit par rapport au sens d'insertion, vers une contre-dépouille (22) du contour des canaux (2), ceci de telle sorte que, après avoir raccordé par soudage avec un autre fil métallique (6) qui, lui, est postérieurement placé sur ce premier fil métallique (5) inséré dans un contour croisé des canaux (3), le premier fil métallique (5) ne puisse plus être déplacé de la zone de la contre-dépouille (22).

3. Revendication suivant la revendication 1, **caractérisé en ce**
**que** d'abord au moins un premier fil métallique (5) est inséré dans un contour des canaux (2) et que, après qu'il repose sur le premier fil métallique (5), un autre fil métallique (6) inséré dans un contour croisé des canaux (3) est déplacé à l'angle droit par rapport au sens d'insertion, ceci de telle sorte que, après avoir raccordé par soudage avec le premier fils métallique (5), ledit fil métallique (6) ne puisse être déplacé de la zone de la contre-dépouille 32).

4. Revendication suivant la revendication 1, **caractérisé en ce**
**qu'**un premier fil métallique (5) est inséré dans un contour des canaux (2) et que, après qu'il repose sur le fond de ce contour des canaux (2), ce fil métallique est déplacé, à l'angle droit par rapport au sens d'insertion, vers une contre-dépouille (22) du contour des canaux (2), ceci de telle sorte que, après avoir raccordé par soudage avec un autre fil métallique (6) qui, lui, est postérieurement placé sur ce premier fil métallique (5) inséré dans un contour croisé des canaux (3), le premier fil métallique (5) ne puisse plus être déplacé de la zone de la contre-dépouille (22) et que l'autre fil métallique (6), après qu'il repose sur le premier fil métallique (5), est déplacé, également à l'angle droit par rapport à son sens d'insertion, vers une contre-dépouille (32) du contour croisé des canaux (3), ceci de telle sorte que, après avoir raccordé par soudage avec le premier fil métallique (5), ledit fil métallique (6) ne puisse être déplacé de la zone du contre-dépouille (32).

5. Revendication suivant la revendication 1, **caractérisé en ce**
**que** les fils métalliques (5, 6. 7) sont insérés au niveau de l'intersection des contours des canaux (2, 3) qui se croisent à un angle d'environ 90°.

6. Revendication suivant la revendication 1, **caractérisé en ce**
**que** de nombreux fils métalliques (5, 6, 7) sont disposés au niveau de l'intersection des contours des canaux (2, 3) et ensuite raccordés l'un avec l'autre par soudage, ce qui fait qu'il y soit fonctionnellement formé un cadre de fil métallique composé de fils métalliques longitudinaux et transversaux.

7. Revendication suivant la revendication 1, **caractérisé en ce**
**que** de nombreux fils métalliques (5, 6, 7) sont insérés dans des contours des canaux (2, 3) de différents éléments de mousse rigide (1).

8. Revendication suivant la revendication 7, **caractérisé en ce**
**que de nombreux** fils métalliques (5, 6, 7) sont disposés dans de nombreux éléments de mousse rigide (1) et ensuite raccordés l'un avec l'autre par soudage, ce qui fait qu'il y soit fonctionnellement formé un cadre de fil métallique composé de fils métalliques longitudinaux et transversaux avec plusieurs segments de mousse rigide (1).

9. Revendication suivant la revendication 1, **caractérisé en ce**
**qu'**en plus des fils métalliques (5, 6, 7) raccordés par soudage au niveau de contours croisés des canaux (2, 3), davantage de contours croisés des canaux qui, eux, sont au moins partiellement situés au niveau des surfaces extérieures et en dehors de l'élément de mousse rigide (1), sont également raccordés par soudage.

10. Revendication suivant la revendication 1, **caractérisé en ce**
**que** sur deux surfaces latérales opposées, chaque élément de mousse rigide (1) présente au moins un contour des canaux ouvert, dans lequel est inséré un fil métallique, et que ces fils métalliques reposent l'un sur l'autre en leur position fonctionnelle et au moins à un endroit où ils seront raccordés par soudage.

11. Revendication suivant la revendication 1, **caractérisé en ce**
**que** lors de l'opération de soudage sur les points d'intersection des fils métalliques, les zones adjacentes au joint de soudage de l'élément de mousse rigide (1) sont fondues, ceci en bénéficiant au moins partiellement de l'apport thermique.
